# EUROPÄISCHE PATENTSCHRIFT

(11) **EP 2 488 383 B1**
(45) Veröffentlichungstag und Bekanntmachung des Hinweises auf die Patenterteilung: **17.05.2017**
(21) Anmeldenummer: 10762598.0
(22) Anmeldetag: 23.09.2010
(51) Int. Cl.: B60K 20/06, B60Q 1/14, B62D 1/04, F16H 59/02

(54) **FAHRZEUG MIT EINEM AM LENKRAD ANGEORDNETEN GETRIEBESCHALTELEMENT**
VEHICLE HAVING A GEARSHIFT ELEMENT ARRANGED ON THE STEERING WHEEL
VÉHICULE MUNI D'UN ÉLÉMENT DE CHANGEMENT DE VITESSE AGENCÉ SUR LE VOLANT

(30) Priorität: 17.10.2009 DE 102009049753
(43) Veröffentlichungstag der Anmeldung: 22.08.2012
(73) Patentinhaber: Bayerische Motoren Werke Aktiengesellschaft, 80809 München (DE)
(72) Erfinder: WALTER, Martin, 80933 Muenchen (DE); TILLE, Thomas, 81249 Muenchen (DE)
(86) Internationale Anmeldenummer: PCT/EP2010/005820
(87) Internationale Veröffentlichungsnummer: WO 2011/044986

(56) Entgegenhaltungen:
- DE-A1-102004 060 979
- DE-A1-102005 038 855
- DE-A1-102007 062 072

## Beschreibung

Die vorliegende Erfindung betrifft ein Fahrzeug gemäß dem Oberbegriff des Patentanspruches 1.

Ein derartiges Fahrzeug ist aus der DE 10 2004 060 979 A1 bekannt. Zum technischen Hintergrund der vorliegenden Erfindung zählen ferner die gattungsgemässe DE 10 2007 062 072 A1 sowie die DE 10 2005 038 855 A1.

Moderne, sportliche Fahrzeuge, wie z. B. manche Fahrzeuge der Marke BMW, weisen zusätzlich zu einem im Bereich der Mittelkonsole angeordneten Getriebeschaltelement so genannte "Schaltwippen" auf, die zum sequentiellen Hochschalten bzw. Herunterschalten von Getriebegängen vorgesehen sind. Unter einer "Schaltwippe" wird ein Betätigungselement verstanden, das z.B. die Form eines Hebels haben oder das ähnlich einer Platte gestaltet sein kann und das schwenkbar am Lenkrad angeordnet ist, d.h. das sich beim Lenken mit dem Lenkrad mitdreht. Bei BMW Fahrzeugen sind die Schaltwippen auf der dem Fahrer abgewandten Seite des Lenkrads angeordnet. Sie sind ergonomisch sehr vorteilhaft angeordnet, da ihre Tast- bzw. Griffbereiche über die oberen Lenkradspeichen nach oben ragen und sich somit im unmittelbaren Sichtfeld des Fahrers befinden und sehr gut von Hand erreichbar sind. Derartige, am Lenkrad angeordnete Schaltwippen ermöglichen ein besonders sportliches Fahren, da der Fahrer "manuell" schalten kann, ohne die Hand vom Lenkrad zu nehmen.

Aufgabe der Erfindung ist es, ein Fahrzeug mit mindestens einem schwenkbar am Lenkrad angeordneten Getriebeschaltelement, insbesondere einer "Schaltwippe", anzugeben, das bzw. die gegenüber herkömmlichen Schaltwippen eine erweiterte Funktionalität aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Getriebe und mindestens einem an einem Lenkrad des Fahrzeugs schwenkbar angeordneten Getriebeschaltelement. Durch Betätigen des Getriebeschaltelements kann das Getriebe elektrisch gesteuert von einem Getriebegang in einen nächsthöheren oder einen nächstniedrigeren Getriebegang geschaltet werden. Der Kern der Erfindung besteht darin, dass an dem Getriebeschaltelement mindestens ein (zusätzliches) elektrisches Schaltelement und mindestens eine optische Anzeigeeinrichtung angeordnet ist. Bei dem Getriebeschaltelement gemäß der Erfindung handelt es sich somit um ein multifunktionales Schalt- und/oder Anzeigeelement, das zusätzlich zum Schalten des Getriebes mindestens zum Schalten einer weiteren Funktion und zum Anzeigen eines Status, eines Fahrzustandsparameters, eines Getriebeschaltzustandes o.ä. vorgesehen ist.

Vorzugsweise ist das mindestens eine (zusätzliche) Schaltelement so gestaltet und angeordnet, dass eine zum Betätigen des Schaltelements aufzubringende Kraft das Getriebeschaltelement unbetätigt lässt. So kann vorgesehen sein, dass das Getriebeschaltelement in Fahrtrichtung und/oder entgegen der Fahrtrichtung betätigbar, insbesondere verschwenkbar ist. Beispielsweise kann vorgesehen sein, dass zum Schalten in einen niedrigeren Getriebegang das Getriebeschaltelement in Richtung der Fahrtrichtung gedrückt und zum Hochschalten in einen höheren Getriebegang nach hinten, d.h. entgegen der Fahrtrichtung in Richtung des Fahrers gezogen werden muss. Um zu vermeiden, dass durch Betätigen des zusätzlichen Schaltelements unbeabsichtigt ein Getriebeschaltvorgang ausgelöst wird, kann vorgesehen sein, dass die Betätigungsrichtung des mindestens einen zusätzlichen Schaltelements im Wesentlichen quer zu Fahrzeuglängsrichtung oder in einer Hochrichtung oder annähernd parallel zu einer Hochrichtung des Fahrzeugs ist. Die zum Betätigen des Schaltelements erforderliche Kraft sollte also keine oder nur eines sehr kleine Kraftkomponente haben, die parallel zur Richtung der Betätigungskraft des Getriebeschaltelements ist.

Um dies zu erreichen, kann das zusätzliche Schaltelement in einem Randbereich, insbesondere an einem seitlichen, d.h. der Fahrzeugseite zugewandten Rand des Getriebeschaltelements angeordnet sein. Alternativ dazu kann das Schaltelement auch an einem oberen, d.h. dem Fahrzeugdach zugewandten Rand des Getriebeschaltelements oder an einem unteren, d.h. dem Fahrzeugboden zugewandten Rand des Getriebeschaltelements angeordnet sein.

Der Begriff "Schaltelement" ist äußerst breit zu interpretieren. Bei dem Schaltelement kann es sich um beispielsweise um einen einfachen Drucktaster oder um einen Doppeltaster bzw. um eine Schaltwippe handeln. Derartige Doppeltaster bzw. Schaltwippen sind z.B. bei Multifunktionslenkrädern von BMW Fahrzeugen anzutreffen, wo sie zum Verstellen der Lautstärke der Hi-Fi-Anlage dienen. Alternativ dazu kann es sich bei dem Schaltelement z.B. auch um Rändelrad bzw. um ein Rändelradsegment handeln. Selbstverständlich sind auch andersartig gestaltete Schaltelemente denkbar.

Es kann vorgesehen sein, dass durch mehrmaliges Betätigen des Schaltelements verschiedene Auswahl- oder Informationsmenüs eines elektronischen Auswahl- und/oder Informationssystems anwählbar sind.

Nach einer Weiterbildung der Erfindung weist die Anzeigeeinrichtung eine Leuchtdiode auf; alternativ dazu kann die Anzeigeeinrichtung auch schlicht durch eine oder mehrere Leuchtdioden gebildet sein. Hierbei können herkömmliche Leuchtdioden oder so genannte organische Leuchtdioden (OLED) Verwendung finden.

Alternativ oder ergänzend dazu kann die Anzeigeeinrichtung auch ein Display aufweisen, insbesondere ein organisches Leuchtdiodendisplay (OLED Display) oder eine Leuchtfolie mittels dem bzw. der verschiedene Symboliken dargestellt werden können. Die Anzeigeeinrichtung kann auch in das Schaltelement, z.B. einen Drucktaster integriert sein. Vorzugsweise ist die Anzeigeeinrichtung auf einer dem Fahrer zugewandten Vorderseite des Getriebeschaltelements bzw. des zusätzlichen Schaltelements angeordnet.

Die Anzeigeeinrichtung kann z.B. zum Anzeigen einer Getriebeschaltempfehlung, z.B. eines aktuell besonders wirtschaftlichen Getriebegangs etc. vorgesehen sein. Alternativ dazu können auch verschiedene andere Fahrzustandsparameter angezeigt werden, wie etwa der aktuell eingelegt Getriebegang.

Ferner können an dem Getriebeschaltelement mehrere zusätzliche Schaltelemente und mehrere Anzeigeeinrichtungen vorgesehen sein. Einzelnen oder allen zusätzlichen Schaltelementen kann jeweils genau eine Anzeigeeinrichtungen zugeordnet sein, welche z.B. die Funktion anzeigt, die durch Betätigen des betreffenden zusätzlichen Schaltelements ausgelöst wird.

Sofern eine Anzeigeeinrichtung als "Schaltpunktanzeige" verwendet wird, kann z.B. auch eine mehrfarbige Symbolik verwendet werden. So kann beispielsweise folgende Logik implementiert sein:
- Anzeige "Grün" bedeutet: optimale Drehzahl ist erreicht;
- Anzeige "Gelb" bedeutet: ab jetzt kann sinnvollerweise geschaltet werden;
- Anzeige "Rot" bedeutet: kritischer Drehzahlbereich, bitte dringend in höheren Gang schalten.

Ferner kann am Lenkrad ein linkes Getriebeschaltelement und ein rechtes Getriebeschaltelement angeordnet sein, wobei das linke Getriebeschaltelement beispielsweise zum Herunterschalten und das rechte Getriebeschaltelement beispielsweise zum Hochschalten von Getriebegängen vorgesehen ist, oder umgekehrt. Dementsprechend kann an dem linken Getriebeschaltelement eine Anzeigeeinrichtung vorgesehen sein, mittels der der Fahrer ggf. zum Herunterschalten aufgefordert wird und am rechten Getriebeschaltelement einen Anzeigeeinrichtung, mit der der Fahrer ggf. zum Hochschalten aufgefordert wird.

Zusammenfassend ermöglicht die Erfindung eine Funktionserweiterung herkömmlicher, am Lenkrad angeordneter Getriebeschaltelemente und zwar in einer ergonomisch optimal erreichbaren bzw. einsehbaren Position. Für den Fahrer ist eine Bedienung von Bedienelementen im Bereich des Lenkrads vorteilhaft, da er kaum vom Straßengeschehen abgelenkt wird.

Durch eine "variable Symbolik" kann ein am Getriebeschaltelement zusätzlich angeordnetes Schaltelement auch mit mehreren unterschiedlichen Funktionen belegt werden, wobei dem Fahrer angezeigt wird, welche Funktion gerade aktiv ist.

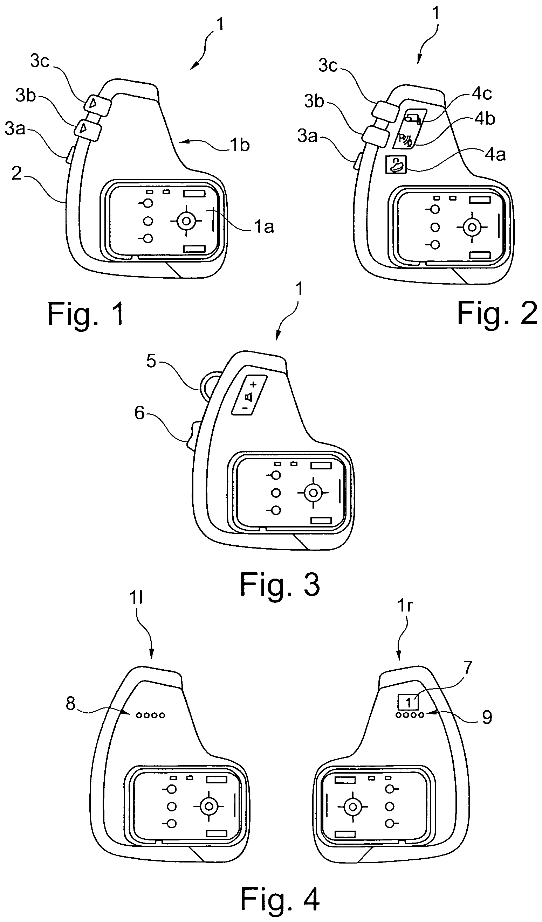

Im Folgenden wird die Erfindung im Zusammenhang mit der Zeichnung näher erläutert. Die Figuren 1 - 4 zeigen verschiedene Beispiele eines Fahrzeugs mit einem Getriebe und mindestens einem an einem Lenkrad des Fahrzeugs schwenkbar angeordneten Getriebeschaltelement. Figur 1 zeigt eine Schaltwippe 1. Ein unterer Bereich 1a der Schaltwippe 1 ist auf einer dem Fahrer abgewandten Seite einer Speiche oder eines "Zentralteils" eines hier nicht näher dargestellten Lenkrads befestigt. Die Schaltwippe 1 ist schwenkbar am Lenkrad angeordnet. Es kann vorgesehen sein, dass die Schaltwippe 1 in Fahrtrichtung, d. h. vom Fahrer weg und/oder entgegen der Fahrtrichtung, d. h. auf den Fahrer zu verschwenkt werden kann. Ein oberer Bereich 1 b der Schaltwippe ragt über die Lenkradspeiche und ist somit für den Fahrer optimal einsehbar.

Bei dem in Figur 1 gezeigten Beispiel sind an einem seitlichen Rand 2 der Schaltwippe 1 drei zusätzliche Schaltelemente 3a, 3b, 3c angeordnet. Bei den zusätzlichen Schaltelementen 3a, 3b, 3c handelt es sich hier um Drucktaster.

Zum Betätigen der Schaltwippe 1 muss eine im Wesentlichen senkrecht zur Zeichenebene gerichtete Betätigungskraft aufgebracht werden. Zum Betätigen der zusätzlichen Schaltelemente 3a, 3b, 3c hingegen ist eine Druckkraft aufzubringen, die im Wesentlichen quer dazu gerichtet ist. Ein unbeabsichtigtes Betätigen der Schaltwippe durch Betätigen der Schaltelemente 3a, 3b, 3c ist somit nahezu ausgeschlossen.

Figur 2 zeigt ein Ausführungsbeispiel gemäss der Erfindung, wobei den drei zusätzlichen Schaltelementen 3a, 3b, 3c, jeweils eine zugeordnete Anzeigeeinrichtung 4a, 4b, 4c zugeordnet ist. Die beiden Anzeigen 4b, 4c sind dabei in einem gemeinsamen Display zusammengefasst.

Figur 3 zeigt eine weitere Variante einer Schaltwippe 1, bei der anstatt von Drucktastern ein Rändelrad 5 sowie ein Doppeltaster 6 (Schaltwippe) vorgesehen ist. Mittels des Rändelrads 5 kann die Lautstärke, z. B. einer Hi-Fi-Anlage verändert werden.

Figur 4 zeigt ein Beispiel, bei dem eine linke Schaltwippe 1l und eine rechte Schaltwippe 1r am Lenkrad (nicht dargestellt) vorgesehen ist. Die rechte Schaltwippe 1 r weist ferner ein Display 7 auf, in dem der aktuell eingelegte Getriebegang angezeigt wird. Beide Schaltwippen weisen ferner mehrere LED 8, 9 auf, die z. B. über eine Farblogik als Schaltpunktanzeige dienen können.

## Patentansprüche

1. Fahrzeug mit
einem Getriebe,
einem an einem Lenkrad des Fahrzeugs schwenkbar angeordneten Getriebeschaltelement (1), wobei durch Betätigen des Getriebeschaltelements (1) das Getriebe elektrisch gesteuert von einem Getriebegang in einen nächsthöheren oder nächstniedrigeren Getriebegang schaltbar
ist, und wobei
an dem Getriebeschaltelement (1) mindestens ein elektrisches Schaltelement (3a, 3b, 3c, 5, 6) und auf einer dem Fahrer zugewandten Vorderseite des Getriebeschaltelements (1) mindestens eine optische Anzeigeeinrichtung (4a, 4b, 4c, 7) angeordnet ist,
**dadurch gekennzeichnet, dass**
die optische Anzeigeeinrichtung (4a, 4b, 4c, 7) seitlich neben dem elektrischen Schaltelement (3a, 3b, 3c, 5, 6) angeordnet ist.

2. Fahrzeug nach Anspruch 1, **dadurch gekennzeichnet, dass** das Schaltelement (3a, 3b, 3c, 5, 6) so gestaltet und angeordnet ist, dass eine zum Betätigen des Schaltelements (3a, 3b, 3c, 5, 6) aufzubringende Kraft das Getriebeschaltelement (1) unbetätigt lässt.

3. Fahrzeug nach Anspruch 1 oder 2, **dadurch gekennzeichnet, dass** die Richtung der zum Betätigen des Schaltelements (3a, 3b, 3c, 5, 6) aufzubringende Kraft senkrecht oder weitgehend senkrecht zur Richtung der Kraft ist, die zum Betätigen des Getriebeschaltelements (1) aufzubringen ist.

4. Fahrzeug nach einem der Ansprüche 1 bis 3, **dadurch gekennzeichnet, dass** das Schaltelement (3a, 3b, 3c, 5, 6) in einem Randbereich(2), insbesondere an einem seitlichen, oberen oder unteren Rand des Getriebeschaltelements (1) angeordnet ist.

5. Fahrzeug nach einem der Ansprüche 1 bis 4, **dadurch gekennzeichnet, dass** das Schaltelements (3a, 3b, 3c, 5, 6) ein Drucktaster (3a, 3b, 3c) ist.

6. Fahrzeug nach einem der vorangehenden Ansprüche, **dadurch gekennzeichnet, dass** das Schaltelement (3a, 3b, 3c, 5, 6) eine Schaltwippe (6) ist, die zwei Drucktaster bildet.

7. Fahrzeug nach einem der vorangehenden Ansprüche, **dadurch gekennzeichnet, dass** das Schaltelement (3a, 3b, 3c, 5, 6) ein Rändelrad bzw. ein Rändelradsegment (5) ist.

8. Fahrzeug nach einem der vorangehenden Ansprüche, **dadurch gekennzeichnet, dass** durch mehrmaliges Betätigen des Schaltelements (3a, 3b, 3c) verschiedene Auswahl- oder Informationsmenüs eines elektronischen Auswahl- und/oder Informationssystems anwählbar sind.

9. Fahrzeug nach einem der vorangehenden Ansprüche, **dadurch gekennzeichnet, dass** die Anzeigeeinrichtung eine Leuchtdiode (9) aufweist oder durch eine Leuchtdiode gebildet ist.

10. Fahrzeug nach einem der vorangehenden Ansprüche, **dadurch gekennzeichnet, dass** die Anzeigeeinrichtung ein Display (4a, 4b, 4c) aufweist, insbesondere ein OLED- Display oder eine Leuchtfolie.

11. Fahrzeug nach einem der vorangehenden Ansprüche, **dadurch gekennzeichnet, dass** die Anzeigeeinrichtung in das Schaltelement integriert ist.

12. Fahrzeug nach einem der vorangehenden Ansprüche, **dadurch gekennzeichnet, dass** eine Anzeigeeinrichtung (8, 9) zum Anzeigen einer Getriebeschaltempfehlung vorgesehen ist.

13. Fahrzeug nach einem der vorangehenden Ansprüche, **dadurch gekennzeichnet, dass** mehrere Schaltelemente (3, 3b, 3c, 5, 6) vorgesehen sind, wobei einzelnen oder allen Schaltelementen (3a, 3b, 3c, 5, 6) jeweils genau eine der Anzeigeeinrichtungen (4a, 4b, 4c) logisch zugeordnet ist.

14. Fahrzeug nach einem der vorangehenden Ansprüche, **dadurch gekennzeichnet, dass** das Getriebeschaltelement (1) in zwei einander entgegengesetzte Richtungen verschwenkbar ist, insbesondere in Fahrtrichtung bzw. in entgegengesetzt der Fahrtrichtung des Fahrzeugs.

## Claims

1. A vehicle with
a transmission,
a gear selection element (1) pivotably arranged on a steering wheel of the vehicle, wherein the transmission can be shifted under electrical control from one transmission gear into a next-higher or next-lower transmission gear by actuating the gear selection element (1), and wherein
on the gear selection element (1) there is arranged at least one electrical selection element (3a, 3b, 3c, 5, 6) and on a front side of the gear selection element (1) facing the driver at least one optical display means (4a, 4b, 4c, 7),
**characterised in that**
the optical display means (4a, 4b, 4c, 7) is arranged laterally next to the electrical selection element (3a, 3b, 3c, 5, 6).

2. A vehicle according to Claim 1, **characterised in that** the selection element (3a, 3b, 3c, 5, 6) is configured and arranged such that a force which is to be applied for actuating the selection element (3a, 3b, 3c, 5, 6) leaves the gear selection element (1) unactuated.

3. A vehicle according to Claim 1 or Claim 2, **characterised in that** the direction of the force to be applied for actuating the selection element (3a, 3b, 3c, 5, 6) is perpendicular or largely perpendicular to the direction of the force which is to be applied for actuating the gear selection element (1).

4. A vehicle according to one of Claims 1 to 3, **characterised in that** the selection element (3a, 3b, 3c, 5, 6) is arranged in an edge region (2), especially on a lateral, upper or lower edge of the gear selection element (1).

5. A vehicle according to one of Claims 1 to 4, **characterised in that** the selection element (3a, 3b, 3c, 5, 6) is a pushbutton (3a, 3b, 3c).

6. A vehicle according to one of the preceding claims, **characterised in that** the selection element (3a, 3b, 3c, 5, 6) is a rocker switch (6) which forms two pushbuttons.

7. A vehicle according to one of the preceding claims, **characterised in that** the selection element (3a, 3b, 3c, 5, 6) is a knurled wheel or a knurled-wheel segment (5).

8. A vehicle according to one of the preceding claims, **characterised in that** various selection or information menus of an electronic selection and/or information system can be selected by repeated actuation of the selection element (3a, 3b, 3c).

9. A vehicle according to one of the preceding claims, **characterised in that** the display means has a light-emitting diode (9) or is formed by a light-emitting diode.

10. A vehicle according to one of the preceding claims, **characterised in that** the display means has a display (4a, 4b, 4c), especially an OLED display or a luminescent film.

11. A vehicle according to one of the preceding claims, **characterised in that** the display means is integrated in the selection element.

12. A vehicle according to one of the preceding claims, **characterised in that** a display means (8, 9) is provided for displaying a gear selection recommendation.

13. A vehicle according to one of the preceding claims, **characterised in that** a plurality of selection elements (3, 3b, 3c, 5, 6) are provided, with in each case precisely one of the display means (4a, 4b, 4c) being logically assigned to individual or all the selection elements (3a, 3b, 3c, 5, 6).

14. A vehicle according to one of the preceding claims, **characterised in that** the gear selection element (1) is pivotable in two opposing directions, especially in the direction of travel or counter to the direction of travel of the vehicle.

## Revendications

1. Véhicule comprenant :
une boîte de vitesses,
un élément de changement de vitesses (1) monté pivotant sur le volant du véhicule, l'actionnement de l'élément de changement de vitesse (1) permettant de commuter la boîte de vitesses par commande électrique pour la faire passer à partir d'un rapport de vitesse, dans le rapport supérieur suivant ou dans le rapport de vitesse inférieur suivant, et
sur l'élément de changement de vitesse (1) est monté au moins un élément de commutation électrique (3a, 3b, 3c, 5, 6), et, sur la face avant de cet élément de changement de vitesse (1) tournée vers le conducteur est monté au moins un dispositif d'affichage optique (4a, 4b, 4c, 7),
**caractérisé en ce que**
le dispositif d'affichage optique (4a, 4b, 4c, 7) est situé latéralement à proximité de l'élément de commutation électrique (3a, 3b, 3c, 5, 6).

2. Véhicule conforme à la revendication 1,
**caractérisé en ce que**
l'élément de commutation (3a, 3b, 3c, 5, 6) est conformé est installé de sorte que la force devant être appliquée pour actionner l'élément de commutation (3a, 3b, 3c, 5, 6) laisse l'élément de changement de vitesse (1) non actionné.

3. Véhicule conforme à la revendication 1 ou 2,
**caractérisé en ce que**
la direction de la force devant être appliquée pour actionner l'élément de commutation (3a, 3b, 3c, 5, 6) est perpendiculaire ou essentiellement perpendiculaire à la direction de la force qui doit être appliquée pour actionner l'élément de changement de vitesse (1).

4. Véhicule conforme à l'une des revendications 1 à 3,
**caractérisé en ce que**
l'élément de commutation (3a, 3b, 3c, 5, 6) est situé dans une zone de bord (2) en particulier sur un bord latéral, supérieur ou inférieur de l'élément de changement de vitesse (1).

5. Véhicule conforme à l'une des revendications 1 à 4,
**caractérisé en ce que**
l'élément de commutation (3a, 3b, 3c, 5, 6) est un bouton poussoir (3a, 3b, 3c).

6. Véhicule conforme à l'une des revendications précédentes,
**caractérisé en ce que**
l'élément de commutation (3a, 3b, 3c, 5, 6) est une bascule de commutation (6) formant deux boutons poussoirs.

7. Véhicule conforme à l'une des revendications précédentes,
**caractérisé en ce que**
l'élément de commutation (3a, 3b, 3c, 5, 6) est une roue à molette ou un segment de roue à molette (5).

8. Véhicule conforme à l'une des revendications précédentes,
**caractérisé en ce qu'**
un actionnement à plusieurs reprises de l'élément de commutation (3a, 3b, 3c) permet de choisir différents menus de sélection ou d'information d'un système de sélection et/ou d'information électronique.

9. Véhicule conforme à l'une des revendications précédentes,
**caractérisé en ce que**
le dispositif d'affichage comporte une diode électroluminescente (9) ou est formé par une diode électroluminescente.

10. Véhicule conforme à l'une des revendications précédentes,
**caractérisé en ce que**
le dispositif d'affichage comporte un écran (4a, 4b, 4c) en particulier un écran OLED ou un film luminescent.

11. Véhicule conforme à l'une des revendications précédentes,
**caractérisé en ce que**
le dispositif d'affichage est intégré dans l'élément de commutation.

12. Véhicule conforme à l'une des revendications précédentes,
**caractérisé en ce qu'**
il est prévu un dispositif d'affichage (8, 9) pour permettre d'afficher une recommandation de changement de vitesse.

13. Véhicule conforme à l'une des revendications précédentes,
**caractérisé en ce qu'**
il est prévu plusieurs éléments de commutation (3, 3b, 3c, 5, 6), et à chacun ou à tous les éléments de commutation (3a, 3b, 3c, 5, 6) est respectivement associé de manière logique exactement l'un des dispositifs d'affichage (4a, 4b, 4c).

14. Véhicule conforme à l'une des revendications précédentes,
**caractérisé en ce que**
l'élément de changement de vitesse (1) peut pivoter dans deux directions opposées, en particulier dans la direction de déplacement ou dans la direction opposée à la direction de déplacement du véhicule.
